# EUROPEAN PATENT SPECIFICATION

(11) **EP 1 850 536 B1**
(45) Date of publication and mention of the grant of the patent: **05.01.2011**
(21) Application number: 06705709.1
(22) Date of filing: 01.03.2006
(51) Int. Cl.: H04L 12/56, H04J 3/16

(54) **METHOD AND APPARATUS FOR IMPLEMENTING A MEMBER DELETION BY THE SINK SIDE OF A LCAS**
VERFAHREN UND VORRICHTUNG ZUR AUSFÜHRUNG DER LÖSCHUNG EINES MITGLIEDES DURCH DIE EMPFANGSSEITE EINES LCAS
MÉTHODE ET DISPOSITIF DE MISE EN OEUVRE DE LA SUPPRESSION D'UN PARTICIPANT PAR LE CÔTÉ RÉCEPTEUR D'UN LCAS

(30) Priority: 01.03.2005 CN 200510033434
(43) Date of publication of application: 31.10.2007
(73) Proprietor: Huawei Technologies Co., Ltd., Longgang District, Shenzhen Guangdong 518129 (CN)
(72) Inventor: YANG, Yang, Huawei Administration Building, Shenzhen Guangdong 518129 (CN); ZHAO, Zhiguang, Huawei Administration Building, Shenzhen Guangdong 518129 (CN)
(74) Representative: Körber, Martin Hans
(86) International application number: PCT/CN2006/000301
(87) International publication number: WO 2006/092097

(56) References cited:
- EP-A1- 1 367 751
- EP-A1- 1 675 292
- CA-A1- 2 420 716
- US-A1- 2005 281 197
- "Link capacity adjustment scheme (LCAS) for virtual concatenated signals" ITU-T G.7042/Y.1305, XX, XX, 1 February 2004 (2004-02-01), pages 1-32, XP002301051
- ZHAOZHIGUANG HUAWEI TECHNOLOGIES CO ET AL: "Proposal for VCG member hitless deletion from LCAS Sink side; D 286" ITU-T DRAFT STUDY PERIOD 2005-2008, INTERNATIONAL TELECOMMUNICATION UNION, GENEVA ; CH, vol. STUDY GROUP 15, 16 May 2005 (2005-05-16), pages 1-3, XP017407402
- LIU G.: 'Analysis on the control principle of link capacity adjustment scheme' CHINA CABLE TELEVISION no. 21, 2003, pages 6 - 8

## Description

### Field of the Invention

The present invention relates to communication technologies, and more particularly, to a method and an apparatus for removing a member of a Link Capacity Adjustment Scheme (LCAS) from a sink and a state machine at the sink.

### Background of the Invention

LCAS, defined by International Telecommunications Union Telecommunication Standardization Sector (ITU-T) in G.7042, provides a negotiation mechanism between Virtual Concatenation Group (VCG) source and sink to guarantee that there is no hit to traffic when a member is added to or removed from the sink, thereby implementing hitless bandwidth modification.

Establishment or release of a Virtual Concatenation (VC) and addition or removal of a member are achieved by changing a field of a control packet and establishing a negotiation process between the source and the sink. The control packet describes the state of the VC link and ensures synchronization of changes in network between the source and the sink. The control packet mainly includes the following fields:
1. Member Status (MST) field, sent from the sink to the source, used to convey status of the members of the VC;
2. Re-Sequence Acknowledge (RS-Ack) bit, sent from the sink to the source, used for transferring a change of the sequence of the members detected by the sink;
3. Control (CTRL) field, sent from the source to the sink, used to synchronize the sink with the source and provide the status of the member of the VCG;
4. Group Identification (GID) bit, used for identification of the VCG;
5. Cyclic Redundancy Check (CRC) field, used to protect the control packet.

For each member in the VCG, there is a state machine at the source and a state machine at the sink. The state machine at the source includes five states: IDLE, NORM,

DNU (Do Not Use), ADD and REMOVE. The state machine at the sink includes three states: IDLE, OK and FAIL; wherein if an incoming signal for the member experiences no failure condition or has received and acknowledged a request for addition of the member, the member is in the OK state; if the incoming signal for the member experiences a failure condition or an incoming request for removal of the member has been received and acknowledged, the member is in the FAIL state.

In G.7042, for the purpose of guaranteeing no hit to the traffic, the LCAS requires that the addition or removal of a member should be initiated at the source. The detailed implementation is described in the related standards. Because the addition or removal of the member at the source is not related to the present invention, it will not be described herein. As to the addition or removal of the member initiated at the sink, the state machine at the sink defined by the G.7042 cannot ensure that no hit to the traffic and hitless modification of the bandwidth.

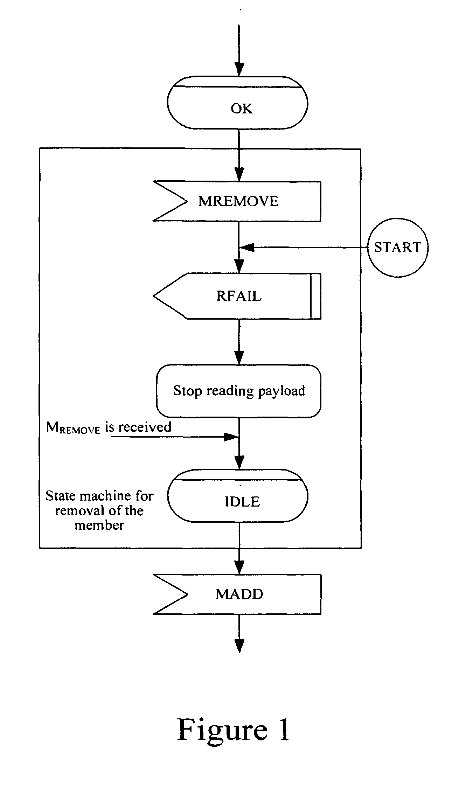

Figure 1 is a schematic diagram illustrating a negotiation procedure of the removal of a member initiated at the sink defined by the prior art G.7042. As shown in Figure 1, when a member in the OK state receives a remove command M_{REMOVE} from a Network Management System (NMS), the sink sends MST=FAIL to the source, and stops reading payload from the member. The state of the member moves to the IDLE state. Thus, the member is removed.

When the NMS initiates the removal of the member at the sink, the negotiation procedure of the state machine at the sink includes:
1) After receiving the M_{REMOVE} from the NMS, the sink sends MST=FAIL to the source;
2) From the beginning of next multiframe, the sink stops reading payload from the member and moves the member to the IDLE state, i.e., the member is removed.

It should be noted that the part circled by dotted lines in Figure 1, i.e., the state machine of the removal of the member, is what is related to the present invention. Other parts are the same as those defined in the G.7042 and are not described herein.

The corresponding negotiation procedure of the state machine at the source defined in the G.7042 includes:
1) The source retrieves the MST=FAIL;
2) Change CTRL =DNU, i.e., indicate that the state of the member is moved from the NORM state to the DNU state at the source;
3) From the beginning of the next multiframe, the source stops sending payload to the member.

In the above negotiation procedure diagram, the MST=FAIL sent by the sink will not be acquired by the source until 64ms/128ms elapses. Supposing that a time interval from the sink sending the MST=FAIL to stopping reading payload from the member is t_{Rx}, a time interval from the source acquiring the MST=FAIL to the member moving to the DNU state is t_{Tx}. If the time when the source stops sending payload differs from the time when the sink stops reading payload, for example, t_{Rx} is smaller or larger than t_{Tx} + 64ms/128ms, there will be hit to the traffic. Moreover, the t_{Rx} and t_{Tx} for each sink or source are different. Therefore, with the state machine at the sink defined by the G.7042, it cannot be guaranteed no hit on the traffic when the sink initiates the removal of the member, and thus cannot guarantee the hitless modification of the bandwith.

EP 1675292 A1, which is prior art according to Article 54(3) EPC, discloses a method comprising the steps of transmitting a first control message from the sink side to the source side comprising a fail message for one of said link members, while continuing reception of payload data for said one link member, receiving said first control message at the source side and transmitting in response a second control message from the source side to the sink side comprising a message indicating that payload data of the said one link member shall not be used, while discontinuing transmission of payload data for said one link member; and receiving said second control message at the sink side, and, in response thereto, discontinuing the reception of payload data for said one link member and removing or disabling said one link member from said virtual concatenation group on the sink side.

### Summary of the Invention

The present invention provides a method and an apparatus for removing a member of a Link Capacity Adjustment Scheme (LCAS) from a sink, to guarantee no hit to traffic when a sink initiates the removal of the member.

The present invention also provides a state machine at the sink for implementing removal of a member initiated by a sink, to guarantee no hit to the traffic when the sink initiates the removal of the member.

The method for removing a member of the LCAS from the sink includes:
notifying, by the sink, a source that a member to be removed is in a REMOVE state after receiving a remove command; and
determining, by the sink, whether a notification response from the source is received; if the notification response is not received, keeping the member in the REMOVE state, keeping reading payload from the member and waiting for the notification response; if the notification response is received, moving the member to an IDLE state when the sink waits for the notification response from the source if the sink detects failure of the member, the sink stopping reading payload from the member at once and removing the member from the sink.

The notifying the source that the member is in the REMOVE state after receiving a remove command includes: sending, by the sink, a Member Status (MST)=FAIL to the source; and moving, by the sink, the member from a OK state to the REMOVE state.

The notification response message includes CTRL= Do Not Use (DNU), or CTRL=ADD or CTRL=IDLE.

The method further includes: stopping, by the sink, reading payload from the member from beginning of a next multiframe after receiving the notification response from the source.

The method further includes: stopping, by the sink, reading payload from the member after moving the member to an IDLE state.

The method further includes: removing, by the sink, the member after stopping reading payload from the member.

An apparatus for removing a member of a Link Capacity Adjustment Scheme (LCAS) from a sink includes:
a unit, adapted for notifying a source that a member is in a REMOVE state after receiving a remove command; and determining whether a notification response from the source is received; if the notification response is not received, keeping the member in the REMOVE state, keeping reading payload from the member, and waiting for the notification response; if the notification response is received, moving the member to an IDLE state; when waiting for the notification response from the source, if a failure of the member is detected, the unit is further adapted to stop reading payload from the member at once and remove the member from the sink.

Wherein the unit is further adapted for sending a Member Status (MST)=FAIL to the source; and moving the member from a OK state to the REMOVE state.

Wherein the unit is further adapted for stopping reading payload from the member from beginning of a next multiframe after receiving the notification response from the source.

Wherein the unit is further adapted for stopping reading payload from the member after moving the member to an IDLE state.

Wherein the unit is further adapted for removing the member after stopping reading payload from the member.
In the present invention, a state for indicating that a member is in the remove process, i.e., a REMOVE state, is added to the state machine at the sink defined by the

G.7042. In the REMOVE state, the sink waits for the notification response from the source and keeps reading payload from the member. The sink stops reading payload from the member from beginning of a next multiframe after receiving the notification response.

The method, apparatus and state machine provided by the present invention guarantee a synchronous modification of the bandwidth at the source and the sink, thereby guaranteeing no hit to the traffic.

### Brief Description of the Drawings

Figure 1 is a schematic diagram illustrating a negotiation procedure of the removal of a member initiated at the sink defined by the G.7042 according to the related art.
Figure 2 is a schematic diagram illustrating a negotiation procedure of removal of a member initiated at the sink according to an embodiment of the present invention.

### Embodiments of the Invention

The present invention is described in detail as follows with reference to accompanying drawings and embodiments.

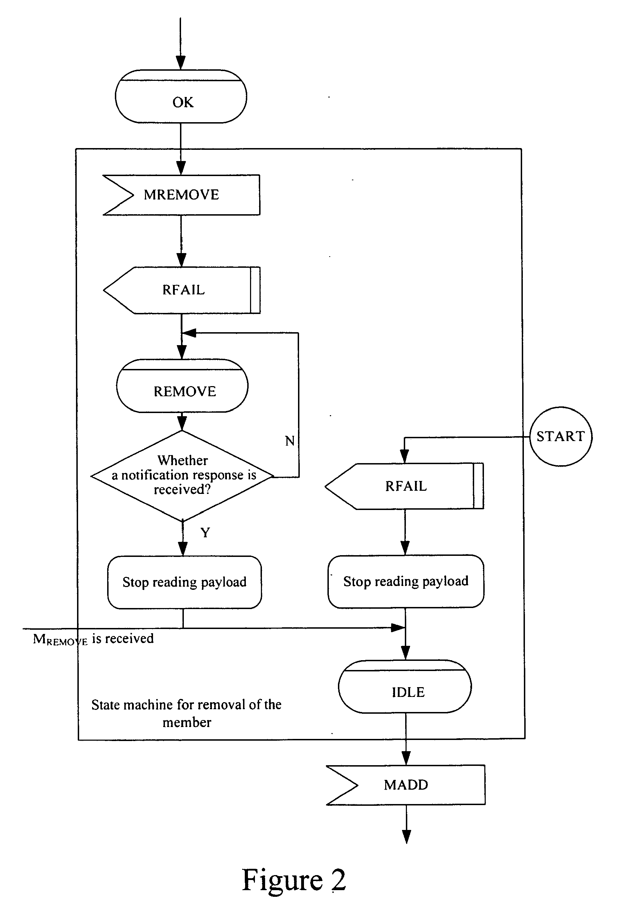

Figure 2 is a schematic diagram illustrating a negotiation procedure of removal of a member initiated at the sink according to an embodiment of the present invention. In the OK state, the sink receives a remove command M_{REMOVE} from the NMS or the source or other management devices. The sink notifies the source that the member to be removed moves into the REMOVE state, and determines whether a notification response is received from the source. If the notification response is not received, the sink keeps the member in the REMOVE state and keeps reading payload from the member and waits for the notification response. If the notification response is received, the sink moves the member to the IDLE state. The negotiation procedure specifically includes:
a) The sink sends an MST=FAIL to the source to notify the source to change the state of the member at the source, and moves the state of the member at the sink from the OK state to the REMOVE state;
b) After retrieving the MST= FAIL, the source signals CTRL=DNU to move the member from the NORM state to the DNU state, and sends the CTRL=DNU to the sink;
c) From the beginning of the next multiframe, the sink stops reading payload from the member after receiving the CTRL=DNU;
d) The sink moves the member from the REMOVE state to the IDLE state to indicate that the member is removed successfully.

At the source, from the next multiframe after signaling the CTRL=DNU, the source stops sending payload to the member. At the sink, from the next multiframe after receiving the CTRL=DNU, the sink stops reading payload from the member. Thus, a synchronous modification of the bandwidth at the source and the sink may be guaranteed, thereby guaranteeing no hit on the traffic.

It should to be noted that the part circled by dotted lines in Figure 2, i.e., the state machine of the removal of the member, is what is related to the present invention. Other parts are the same as those defined in the G.7042 and are not described herein.

Further, when the sink waits for the notification response from the source, if the sink detects failure of the member, the sink stops reading payload from the member at once and removes the member from the sink. Or, when the member is in the NORM state, the sink determines whether to remove the member according to the CTRL field sent by the source. For example, the sink determines to remove the member if CTRL= DNU/ADD/IDLE is received.

The foregoing description is only the preferred embodiments of the present invention and is not for limiting the protection scope of the present invention. All the modifications, equivalent replacements or improvements within the principle of the present invention shall be covered under the protection scope of the present invention.

## Claims

1. A method for removing a member of a Link Capacity Adjustment Scheme (LCAS) from a sink, comprising:
notifying, by a sink, a source that a member is in a REMOVE state after receiving a remove command; and
**characterised by**
determining, by the sink, whether a notification response from the source is received; if the notification response is not received, keeping the member in the REMOVE state, keeping reading payload from the member, and waiting for the notification response; if the notification response is received, moving the member to an IDLE state; whereby, when the sink waits for the notification response from the source, if the sink detects failure of the member, the sink stops reading payload from the member at once and removes the member from the sink.

2. The method of claim 1, wherein the notifying the source that the member is in the REMOVE state after receiving a remove command comprises:
sending, by the sink, a Member Status (MST)=FAIL to the source; and
moving, by the sink, the member from a OK state to the REMOVE state.

3. The method of claim 1, wherein the notification response comprises any one of CTRL= Do Not Use (DNU), CTRL=ADD and CTRL=IDLE.

4. The method of claim 1, further comprising:
stopping, by the sink, reading payload from the member from beginning of a next multiframe after receiving the notification response from the source.

5. The method of claim 1, further comprising:
stopping, by the sink, reading payload from the member after moving the member to an IDLE state.

6. The method of claim 5, further comprising:
removing, by the sink, the member after stopping reading payload from the member.

7. An apparatus for removing a member of a Link Capacity Adjustment Scheme (LCAS) from a sink, comprising:
a unit, adapted for notifying a source that a member is in a REMOVE state after receiving a remove command; **characterised in that** the unit is adapted for determining whether a notification response from the source is received; if the notification response is not received, keeping the member in the REMOVE state, keeping reading payload from the member, and waiting for the notification response; if the notification response is received, moving the member to an IDLE state; whereby, when waiting for the notification response from the source, if a failure of the member is detected, the unit is further adapted to stop reading payload from the member at once and remove the member from the sink.

8. The apparatus of claim 7, wherein the unit is further adapted for sending a Member Status (MST)=FAIL to the source; and moving the member from a OK state to the REMOVE state.

9. The apparatus of claim 7, wherein the unit is further adapted for stopping reading payload from the member from beginning of a next multiframe after receiving the notification response from the source.

10. The apparatus of claim 7, wherein the unit is further adapted for stopping reading payload from the member after moving the member to an IDLE state.

11. The apparatus of claim 10, wherein the unit is further adapted for removing the member after stopping reading payload from the member.

## Patentansprüche

1. Verfahren zum Entfernen eines Mitglieds eines Link Capacity Adjustment Scheme bzw. LCAS aus einer Senke, mit den folgenden Schritten:
eine Senke benachrichtigt eine Quelle, dass sich ein Mitglied in einem REMOVE-Zustand befindet, nachdem ein Entfernungsbefehl empfangen wird; und
**dadurch gekennzeichnet, dass**
die Senke bestimmt, ob eine Benachrichtigungsantwort von der Quelle empfangen wird; wenn die Benachrichtigungsantwort nicht empfangen wird, das Mitglied in dem REMOVE-Zustand gehalten wird, weiter Nutzinformationen von dem Mitglied gelesen werden und auf die Benachrichtigungsantwort gewartet wird; wenn die Benachrichtigungsantwort empfangen wird, das Mitglied in einen IDLE-Zustand überführt wird; wobei, wenn die Senke auf die Benachrichtigungsantwort von der Quelle wartet, wenn die Senke einen Ausfall des Mitglieds detektiert, die Senke mit dem Lesen von Nutzinformationen von dem Mitglied sofort aufhört und das Mitglied aus der Senke entfernt.

2. Verfahren nach Anspruch 1, wobei das Benachrichtigen der Quelle, dass sich das Mitglied in dem REMOVE-Zustand befindet, nachdem ein Entfernungsbefehl empfangen wird, Folgendes umfasst:
die Senke sendet einen Mitgliedsstatus bzw. MST=FAIL zu der Quelle; und
die Senke überführt das Mitglied von einem OK-Zustand in den REMOVE-Zustand.

3. Verfahren nach Anspruch 1, wobei die Benachrichtigungsantwort eine beliebige der folgenden Alternativen umfasst:
CTRL=Nicht Benutzen bzw. DNU, CTRL=ADD und CTRL=IDLE.

4. Verfahren nach Anspruch 1, ferner mit dem folgenden Schritt:
die Senke hört mit dem Lesen von Nutzinformationen von dem Mitglied vom Anfang eines nächsten Multirahmens auf, nachdem die Benachrichtigungsantwort von der Quelle empfangen wird.

5. Verfahren nach Anspruch 1, ferner mit dem folgenden Schritt:
die Senke hört mit dem Lesen von Nutzinformationen von dem Mitglied auf, nachdem das Mitglied in den IDLE-Zustand überführt wird.

6. Verfahren nach Anspruch 5, ferner mit dem folgenden Schritt:
die Senke entfernt das Mitglied nach dem Aufhören mit dem Lesen von Nutzinformationen von dem Mitglied.

7. Vorrichtung zum Entfernen eines Mitglieds eines Link Capacity Adjustment Scheme bzw. LCAS aus einer Senke, umfassend:
eine Einheit, die dafür ausgelegt ist, eine Quelle zu benachrichtigen, dass sich ein Mitglied in einem REMOVE-Zustand befindet, nachdem ein Entfernungsbefehl empfangen wird; **dadurch gekennzeichnet, dass** die Einheit für Folgendes ausgelegt ist: Bestimmen, ob eine Benachrichtigungsantwort von der Quelle empfangen wird; wenn die Benachrichtigungsantwort nicht empfangen wird, Halten des Mitglieds in dem REMOVE-Zustand, Weiterlesen von Nutzinformationen von dem Mitglied und Warten auf die Benachrichtigungsantwort; wenn die Benachrichtigungsantwort empfangen wird, Überführen des Mitglieds in einen IDLE-Zustand; wobei beim Warten auf die Benachrichtigungsantwort von der Quelle, wenn ein Ausfall des Mitglieds detektiert wird, die Einheit ferner dafür ausgelegt ist, mit dem Lesen von Nutzinformationen von dem Mitglied sofort aufzuhören und das Mitglied aus der Senke zu entfernen.

8. Vorrichtung nach Anspruch 7, wobei die Einheit ferner dafür ausgelegt ist, einen Mitgliedsstatus bzw. MST=FAIL zu der Quelle zu senden; und das Mitglied von einem OK-Zustand in den REMOVE-Zustand zu überführen.

9. Vorrichtung nach Anspruch 7, wobei die Einheit ferner dafür ausgelegt ist, mit dem Lesen von Nutzinformationen von dem Mitglied vom Anfang eines nächsten Multirahmens aufzuhören, nachdem die Benachrichtigungsantwort von der Quelle empfangen wird.

10. Vorrichtung nach Anspruch 7, wobei die Einheit ferner dafür ausgelegt ist, mit dem Lesen von Nutzinformationen von dem Mitglied aufzuhören, nachdem das Mitglied in einen IDLE-Zustand überführt wird.

11. Vorrichtung nach Anspruch 10, wobei die Einheit ferner dafür ausgelegt ist, das Mitglied nach dem Aufhören mit dem Lesen von Nutzinformationen von dem Mitglied zu entfernen.

## Revendications

1. Procédé de suppression d'un participant à un Plan de Réglage de Capacité de Liaison (LCAS) d'un côté récepteur, comprenant :
la notification par un côté récepteur à une source qu'un participant se trouve dans un état de SUPPRESSION après avoir reçu une commande de suppression ; et
**caractérisé par**
la détermination, par le côté récepteur, si une réponse de notification depuis la source est reçue ou non ; si la réponse de notification n'est pas reçue, le maintien du participant dans l'état de SUPPRESSION, la continuation de la lecture de la charge utile du participant, et l'attente de la réponse de notification ; si la réponse de notification est reçue, la mise du participant dans un état de SUSPENSION ; dans lequel quand le côté récepteur attend la réponse de notification de la source, si le côté récepteur détecte une défaillance du participant, le côté récepteur arrête immédiatement la lecture de la charge utile du participant et supprime le participant du côté récepteur.

2. Procédé selon la revendication 1, dans lequel la notification à la source que le participant se trouve dans l'état de SUPPRESSION après avoir reçu une commande de suppression comprend :
l'envoi, par le côté récepteur, d'un Etat Participant (MST)=ANORMAL à la source ; et
la mise, par le côté récepteur, du participant d'un état OK à l'état de SUPPRESSION.

3. Procédé selon la revendication 1, dans lequel la réponse de notification comprend l'un quelconque de CTRL = Ne pas utiliser (DNU), CTRL = AJOUTER et CTRL = SUSPENDRE.

4. Procédé selon la revendication 1, comprenant en outre :
l'arrêt, par le côté récepteur, de la lecture de la charge utile du participant depuis le début d'une multitrame suivante après avoir reçu la réponse de notification de la source.

5. Procédé selon la revendication 1, comprenant en outre :
l'arrêt, par le côté récepteur, de la lecture de la charge utile du participant après avoir mis le participant dans un état de SUSPENSION.

6. Procédé selon la revendication 5, comprenant en outre :
la suppression, par le côté récepteur, du participant après avoir arrêté la lecture de la charge utile du participant.

7. Appareil de suppression d'un participant à un Plan de Réglage de Capacité de Liaison (LCAS) d'un côté récepteur, comprenant :
une unité, adaptée pour notifier à une source qu'un participant se trouve dans un état de SUPPRESSION après avoir reçu une commande de suppression ; **caractérisé en ce que** l'unité est adaptée pour déterminer si une réponse de notification depuis la source est reçue ou non ; si la réponse de notification n'est pas reçue, maintenir le participant dans l'état de SUPPRESSION, continuer la lecture de la charge utile du participant, et attendre la réponse de notification ; si la réponse de notification est reçue, mettre le participant dans un état SUSPENSION ; dans lequel durant l'attente de la réponse de notification de la source, si une défaillance du participant est détectée, l'unité est adaptée en outre pour arrêter immédiatement la lecture de la charge utile du participant et supprimer le participant du côté récepteur.

8. Appareil selon la revendication 7, dans lequel l'unité est adaptée en outre pour envoyer un Etat Participant (MST)=ANORMAL à la source ; et mettre le participant d'un état OK à l'état de SUPPRESSION.

9. Appareil selon la revendication 7, dans lequel l'unité est adaptée en outre pour arrêter la lecture de la charge utile du participant depuis le début d'une multitrame suivante après avoir reçu la réponse de notification de la source.

10. Appareil selon la revendication 7, dans lequel l'unité est adaptée en outre pour arrêter la lecture de la charge utile du participant après avoir mis le participant dans un état de SUSPENSION.

11. Appareil selon la revendication 10, dans lequel l'unité est adaptée en outre pour supprimer le participant après avoir arrêté la lecture de la charge utile du participant.
